# EUROPÄISCHE PATENTSCHRIFT

(11) **EP 3 453 069 B1**
(45) Veröffentlichungstag und Bekanntmachung des Hinweises auf die Patenterteilung: **02.09.2020**
(21) Anmeldenummer: 17705126.5
(22) Anmeldetag: 14.02.2017
(51) Int. Cl.: H01M 10/6552

(54) **KÜHLANORDNUNG FÜR MINDESTENS EIN BATTERIEMODUL, BATTERIEMODUL UND BATTERIEEINHEIT**
COOLING ARRANGEMENT FOR AT LEAST ONE BATTERY MODULE, BATTERY MODULE AND BATTERY UNIT
DISPOSITIF DE REFROIDISSEMENT D'AU MOINS UNE MODULE DE BATTERIE, MODULE DE BATTERIE ET UNITÉ DE BATTERIE

(30) Priorität: 18.04.2016 DE 102016206509
(43) Veröffentlichungstag der Anmeldung: 13.03.2019
(73) Patentinhaber: Volkswagen Aktiengesellschaft, 38440 Wolfsburg (DE)
(72) Erfinder: OPFER, Holger, 38165 Lehre (DE); WOLLING, Kristin, 38102 Braunschweig (DE)
(86) Internationale Anmeldenummer: PCT/EP2017/053315
(87) Internationale Veröffentlichungsnummer: WO 2017/182156

(56) Entgegenhaltungen:
- CN-A- 104 393 366
- JP-B2- 3 284 855
- US-A- 6 013 388
- US-A1- 2003 017 383

## Beschreibung

Die Erfindung betrifft eine Kühlanordnung für mindestens ein Batteriemodul sowie ein Batteriemodul oder eine Batterieeinheit mit einer solchen Kühlanordnung.

Batteriemodule werden beispielsweise in Elektrofahrzeugen eingesetzt. Die Batteriemodule weisen dabei üblicherweise eine Vielzahl von Batteriezellen auf, die sowohl parallel als auch in Reihe geschaltet sein können. Zur Bildung einer Traktionsbatterie oder Batterieeinheit können dann auch wieder mehrere Batteriemodule in Reihe oder parallel geschaltet werden. Ein Problem bei derartigen Batteriemodulen ist die große Wärmeentwicklung, wobei sich die erhöhte Temperatur negativ auf das Leistungsvermögen und die Lebensdauer auswirkt.

Aus der US 8,231,996 B2 ist ein Batteriemodul bekannt, bei dem die Wärme der Batteriezellen mittels Heatpipes und einer Kühleinrichtung mit einer Kühlflüssigkeit abgeführt wird. Heatpipes sind eine besondere Art von Wärmerohren, bei der die Rückführung des Mediums durch Kapillareffekte erfolgt. Die Kühleinrichtung ist als Kühlplatte ausgebildet, die ein Gehäuse aufweist, durch das die Kühlflüssigkeit strömen kann. Dabei wird vorgeschlagen, die Elektroden der Batteriezellen bzw. deren elektrische Verbindungselemente thermisch an die Heatpipe zu koppeln, wobei dann der Kondensator der Heatpipe an die Kühleinrichtung geführt wird. Der Kondensator ist dabei um 90° zur Längsrichtung der Heatpipe geknickt bzw. gebogen, um den Kondensator möglichst großflächig mit der Oberseite der Kühlplatte zu verbinden.

Gattungsgemäße Kühlanordnungen sind aus der US 2003/017383 A1, der CN 104 393 366 A1 sowie der JP 3284855 B2 bekannt.

Der Erfindung liegt das technische Problem zugrunde, eine Kühlanordnung für mindestens ein Batteriemodul zu schaffen, wo die Wärmeabfuhr über die Heatpipe verbessert wird. Ein weiteres Problem ist die Schaffung eines Batteriemoduls oder einer Batterieeinheit mit verbesserter Kühlung.

Die Lösung des technischen Problems ergibt sich durch eine Kühlanordnung mit den Merkmalen des Anspruchs 1 sowie ein Batteriemodul und eine Batterieeinheit mit den Merkmalen des Anspruchs 7. Weitere vorteilhafte Ausgestaltungen der Erfindung ergeben sich aus den Unteransprüchen.

Die Kühlanordnung für mindestens ein Batteriemodul, wobei das Batteriemodul mindestens zwei Batteriezellen aufweist, deren Elektroden miteinander verbunden sind, weist mindestens eine Heatpipe und eine Wärmesenke auf. Die Batteriezellen können dabei in Reihe und/oder parallel verschaltet sein. Die Heatpipe weist einen Verdampfer und einen Kondensator auf, wobei die Kühlanordnung mindestens ein erstes Verbindungsmittel aufweist. Das erste Verbindungsmittel ist derart ausgebildet, um den Verdampfer der Heatpipe mit mindestens einer Elektrode oder einer Verbindungsstelle von zwei Elektroden derart zu verbinden, dass die Heatpipe mit der Elektrode oder der Verbindungsstelle thermisch gekoppelt ist, aber elektrisch Heatpipe und Elektrode isoliert sind. Das erste Verbindungsmittel ist beispielsweise als sogenanntes Thermopad aus Silikon oder Acrylat ausgebildet. Der Kondensator der Heatpipe ist mit der Wärmesenke verbunden, wobei die Wärmesenke ein Deckel des Batteriemoduls oder ein Deckel einer Batterieeinheit mit mehreren Batteriemodulen ist. Der Vorteil, als Wärmesenke den Deckel zu verwenden, ist, dass die Wege von der Heatpipe zur Wärmesenke verkürzt werden und die Heatpipe daher kürzer ausgebildet werden kann. Auch sind keine Abflachungen bei der Heatpipe notwendig. Des Weiteren befindet sich die Kondensatorzone über der Verdampferzone und ermöglicht so die Nutzung von Gravitation (Flüssigkeitsrückführung) und Auftrieb (Dampfbewegung). Dies wiederum erlaubt es, die Heatpipe mit einem größeren Wirkungsgrad zu betreiben. Ein weiterer Vorteil ist die bessere Zugänglichkeit, was auch Montagevorteile hat, was später noch näher erläutert wird. Dabei sei aber auch angemerkt, dass neben der erfindungsgemäßen Kühlanordnung noch weitere Kühlanordnungen vorhanden sein können.

Dabei ist die mindestens eine Heatpipe U-förmig ausgebildet, wobei ein erster Schenkel der U-förmigen Heatpipe mit Elektroden des Batteriemoduls thermisch gekoppelt ist und ein zweiter Schenkel der Heatpipe mit dem Deckel thermisch gekoppelt ist. Der erste Schenkel stellt also den Verdampfer und der zweite Schenkel den Kondensator dar. Dies erlaubt eine sehr flache Bauweise.

Weiter ist die Heatpipe derart ausgebildet, dass bei geschlossenem Deckel der Deckel den zweiten Schenkel federelastisch spannt. Dadurch wird die Heatpipe mit einem entsprechenden Kontaktdruck gegen den Deckel gepresst, was die thermische Ankopplung verbessert.

Ist die federelastische Auslenkung der Heatpipe alleine nicht ausreichend, so kann zwischen dem ersten Schenkel und dem zweiten Schenkel mindestens ein federelastisches Element angeordnet sein, das derart ausgebildet ist, dass der geschlossene Deckel das federelastische Element zusammendrückt. Hierdurch kann die Anpresskraft des zweiten Schenkels gegen den Deckel weiter erhöht werden. Das federelastische Element ist beispielsweise eine Feder oder eine Gummi-Zwischenlage.

In einer weiteren Ausführungsform ist der Deckel aus Metall, wobei zwischen der Heatpipe und dem Deckel ein thermisch leitendes und elektrisch isoliertes Material angeordnet ist. Dadurch kann der thermische Übergangswiderstand reduziert werden. Dabei sei angemerkt, dass auf die elektrische Isolation gegebenenfalls verzichtet werden kann, da die Heatpipe im Normalfall nicht spannungsführend ist. Allerdings bietet die elektrisch isolierte Anbindung an den Deckel eine größere Sicherheit im Fehlerfall.

In einer weiteren Ausführungsform ist der Deckel an der nach außen gewandten Oberseite mit Rippen ausgebildet, um die Wärme besser abzuführen. Des Weiteren kann die Oberfläche des Deckels derart strukturiert sein, um eine Luftströmung eines Lüfters zu verbessern.

In einer weiteren Ausführungsform ist die mindestens eine Heatpipe mit einem Rahmen verbunden, wobei der Rahmen mit einem Befestigungsmittel ausgebildet ist, um den Rahmen an einem Gehäuse des Batteriemoduls oder der Batterieeinheit zu befestigen. Dies erlaubt es, die Heatpipe oder die Heatpipes besonders einfach zu montieren und auszurichten. Der bestückte Rahmen kann dann als Bauteil vorkonfektioniert werden und im Produktionsprozess schnell und einfach eingebaut werden. Vorzugsweise sind dann die ersten Verbindungsmittel und/oder das thermisch leitende und elektrisch isolierende Material vorab auf der oder den Heatpipes aufgebracht.

In einer Ausführungsform sind alle einem Batteriemodul zugeordneten Heatpipes mit einem gemeinsamen Rahmen verbunden.

Die Erfindung betrifft auch ein Batteriemodul oder eine Batterieeinheit, die eine solche zur zuvor beschriebenen Kühlanordnung aufweist.

Ein bevorzugtes Anwendungsgebiet ist eine Traktionsbatterie eines Elektro- oder Hybrid-Kraftfahrzeugs.

Die Erfindung wird nachfolgend anhand eines bevorzugten Ausführungsbeispiels näher erläutert. Die Figuren zeigen:
- Fig. 1: eine schematische Vorderansicht eines Batteriemoduls,
- Fig. 2: eine schematische Draufsicht auf einen Rahmen und
- Fig. 3: eine schematische Vorderansicht einer Batterieeinheit.

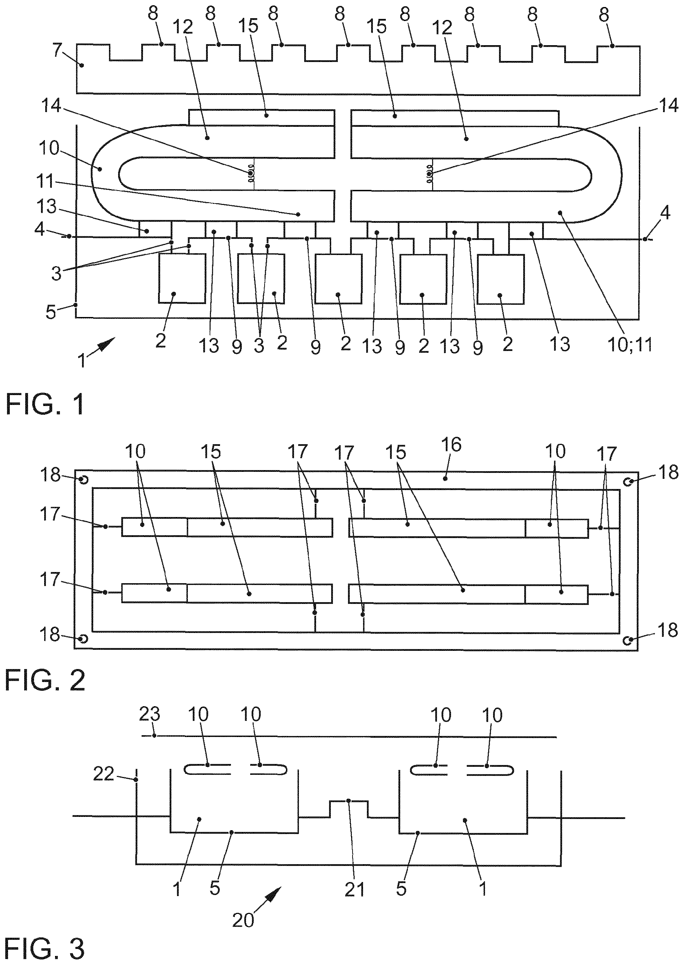

In Fig. 1 ist schematisch ein Batteriemodul dargestellt. Das Batteriemodul 1 weist eine Vielzahl von Batteriezellen 2 mit Elektroden 3 auf. In Fig. 1 sind dabei sechs Batteriezellen 2 beispielhaft dargestellt, die durch Zellverbinder 9 in Reihe geschaltet sind, wobei die freien Anschlüsse der letzten Batteriezellen 2 die externen Anschlüsse 4 des Batteriemoduls 1 bilden. Die Batteriezellen 2 sind in einem Gehäuse 5 angeordnet, das durch einen Deckel 7 mit Rippen 8 verschlossen werden kann. Weiter weist das Batteriemodul 1 zwei Heatpipes 10 auf. Die Heatpipes 10 sind U-förmig gebogen, wobei ein erster Schenkel 11 einen Verdampfer bildet und ein zweiter Schenkel 12 den Kondensator bildet. Über erste Verbindungsmittel 13 sind die ersten Schenkel 11 der Heatpipes 10 mit dem Zellverbindern 9 bzw. den Elektroden 3 der äußeren Batteriezellen 2 verbunden. Die ersten Verbindungsmittel 13 sind vorzugsweise als Thermopads ausgebildet, beispielsweise aus Silikon oder Acryl. Über die ersten Verbindungsmittel 13 wird die Heatpipe 10 thermisch mit den Elektroden 3 bzw. Zellverbinder 9 gekoppelt, um die dort entstehende Wärme abzuführen. Elektrisch wirken die Verbindungsmittel als Isolator, da ansonsten die Heatpipe 10 die Batteriezellen 21 kurzschließen würde, da üblicherweise die Heatpipes als Kupferrohre ausgebildet sind. Weiter ist zwischen dem ersten Schenkel 11 und dem zweiten Schenkel 12 ein federelastisches Element 14 angeordnet. Auf dem zweiten Schenkel 12 oder auf dem Deckel 7 ist ein Material 15 angeordnet, um Heatpipe 10 und Deckel 7 thermisch zu koppeln und elektrisch zu isolieren, da der Deckel 7 vorzugsweise aus Metall ist. Dabei ragen die Heatpipe 10 mit dem Material 15 über den Rand des Gehäuses 5, sodass beim Schließen der Deckel 7 die zweiten Schenkel 12 der Heatpipes 10 nach unten drückt. Dies führt zum Spannen der federelastischen Elemente 14, sodass die zweiten Schenkel 12 mit einer Kraft gegen den Deckel 7 drücken, was die thermische Kopplung verbessert. Das Material 15 kann dabei ebenfalls als Thermopad ausgebildet sein.

In Fig. 2 ist ein Rahmen 16 dargestellt, der vier Heatpipes 10 trägt. Die Verbindung zwischen Rahmen und Heatpipes 10 ist durch Verbindungselemente 17 angedeutet. Weiter weist der Rahmen Befestigungsmittel 18 auf, beispielsweise Löcher, durch die dann der Rahmen 16 mit dem Gehäuse 5 des Batteriemoduls 1 verschraubt werden kann. Der Rahmen 16 kann aber auch alternativ mit einem übergeordneten Gehäuse einer Batterieeinheit verbunden werden.

In der Fig. 3 ist stark vereinfacht eine Batterieeinheit 20 mit zwei Batteriemodulen 1 dargestellt. Von den Batteriemodulen 1 sind nur das Gehäuse 5 und die Heatpipes 10 dargestellt. Die Batteriemodule 1 sind über einen Modulverbinder 21 elektrisch in Reihe geschaltet. Die Batteriemodule 1 sind in einem Gehäuse 22 der Batterieeinheit 20 angeordnet. Das Gehäuse 22 wird durch einen Deckel 23 geschlossen, wobei die Funktion des Deckels 23 als Wärmesenke analog dem Deckel 7 gemäß Fig. 1 ist.

## Patentansprüche

1. Kühlanordnung für mindestens ein Batteriemodul (1), wobei das Batteriemodul (1) mindestens zwei Batteriezellen (2) aufweist, deren Elektroden (3) miteinander verbunden sind, wobei die Kühlanordnung mindestens eine Heatpipe (10) und eine Wärmesenke aufweist, wobei die Heatpipe (10) einen Verdampfer und einen Kondensator aufweist, wobei die Kühlanordnung mindestens ein erstes Verbindungsmittel (13) aufweist, das derart ausgebildet ist, um den Verdampfer der Heatpipe (10) mit mindestens einer Elektrode (3) oder einer Verbindungsstelle von zwei Elektroden (3) derart zu verbinden, dass die Heatpipe (10) mit der Elektrode (3) oder der Verbindungsstelle thermisch gekoppelt ist, aber elektrisch Heatpipe (10) und Elektrode (3) isoliert sind, wobei der Kondensator der Heatpipe (10) mit der Wärmesenke verbunden ist, wobei die Wärmesenke ein Deckel (7) des Batteriemoduls (1) oder ein Deckel (23) einer Batterieeinheit (20) mit mehreren Batteriemodulen (1) ist, wobei
die mindestens eine Heatpipe (10) U-förmig ausgebildet ist, wobei ein erster Schenkel (11) der U-förmigen Heatpipe (10) mit Elektroden (3) des Batteriemoduls (1) thermisch gekoppelt ist und ein zweiter Schenkel (12) der Heatpipe (10) mit dem Deckel (7, 23) thermisch gekoppelt ist, wobei
die Heatpipe (10) derart ausgebildet ist, dass bei geschlossenem Deckel (7, 23) der Deckel (7, 23) den zweiten Schenkel (12) federelastisch spannt.

2. Kühlanordnung nach Anspruch 1, **dadurch gekennzeichnet, dass** zwischen dem ersten Schenkel (11) und dem zweiten Schenkel (12) mindestens ein federelastisches Element (14) angeordnet ist, das derart ausgebildet ist, dass der geschlossene Deckel (7, 23) das federelastische Element (14) zusammendrückt.

3. Kühlanordnung nach einem der vorangegangenen Ansprüche, **dadurch gekennzeichnet, dass** der Deckel (7, 23) aus Metall ist, wobei zwischen der Heatpipe (10) und dem Deckel (7, 23) ein thermisch leitendes und elektrisch isolierendes Material (15) angeordnet ist.

4. Kühlanordnung nach einem der vorangegangenen Ansprüche, **dadurch gekennzeichnet, dass** der Deckel (7, 23) an der nach außen gewandten Oberseite mit Rippen (8) ausgebildet ist.

5. Kühlanordnung nach einem der vorangegangenen Ansprüche, **dadurch gekennzeichnet, dass** mindestens eine Heatpipe (10) mit einem Rahmen (16) verbunden ist, wobei der Rahmen (16) mit mindestens einem Befestigungsmittel (18) ausgebildet ist, um den Rahmen (16) an einem Gehäuse (5, 22) des Batteriemoduls (1) oder der Batterieeinheit (20) zu befestigen.

6. Kühlanordnung nach Anspruch 5, **dadurch gekennzeichnet, dass** alle einem Batteriemodul (1) zugeordneten Heatpipes (10) mit einem gemeinsamen Rahmen (16) verbunden sind.

7. Batteriemodul oder Batterieeinheit, **dadurch gekennzeichnet, dass** das Batteriemodul (1) oder die Batterieeinheit (20) mindestens eine Kühlanordnung nach einem der Ansprüche 1 bis 6 aufweist.

## Claims

1. Cooling arrangement for at least one battery module (1), wherein the battery module (1) has at least two battery cells (2) whose electrodes (3) are connected to each other, wherein the cooling arrangement has at least one heat pipe (10) and a heat sink, wherein the heat pipe (10) has an evaporator and a condenser, wherein the cooling arrangement has at least a first connecting means (13), which is designed in such a way as to connect the evaporator of the heat pipe (10) with at least one electrode (3) or a junction of two electrodes (3) such that the heat pipe (10) is thermally coupled to the electrode (3) or the junction, but heat pipe (10) and electrode (3) are electrically isolated, wherein the condenser of the heat pipe (10) is connected to the heat sink, wherein the heat sink is a cover (7) of the battery module (1) or a cover (23) of a battery unit (20) having a plurality of battery modules (1), wherein
the at least one heat pipe (10) is U-shaped, wherein a first leg (11) of the U-shaped heat pipe (10) is thermally coupled to electrodes (3) of the battery module (1) and a second leg (12) of the heat pipe (10) is thermally coupled to the cover (7, 23), wherein
the heat pipe (10) is designed such that when the cover (7, 23) is closed, the cover (7, 23) resiliently spans the second leg (12).

2. Cooling arrangement according to Claim 1, **characterized in that** at least one resilient element (14) is arranged between the first leg (11) and the second leg (12) and is designed such that the closed cover (7, 23) compresses the resilient element (14).

3. Cooling arrangement according to any one of the preceding claims, **characterized in that** the cover (7, 23) is made of metal, wherein a thermally conductive and electrically insulating material (15) is arranged between the heat pipe (10) and the cover (7, 23).

4. Cooling arrangement according to any one of the preceding claims, **characterized in that** the cover (7, 23) is formed with ribs (8) on the externally facing upper side.

5. Cooling arrangement according to any one of the preceding claims, **characterized in that** at least one heat pipe (10) is connected to a frame (16), wherein the frame (16) is formed with at least one fastening means (18) in order to fasten the frame (16) to a housing (5, 22) of the battery module (1) or of the battery unit (20).

6. Cooling arrangement according to Claim 5, **characterized in that** all of the heat pipes (10) assigned to a battery module (1) are connected to a common frame (16).

7. Battery module or battery unit, **characterized in that** the battery module (1) or the battery unit (20) has at least one cooling arrangement according to any one of Claims 1 to 6.

## Revendications

1. Dispositif de refroidissement d'au moins un module de batterie (1), le module de batterie (1) présentant au moins deux cellules de batterie (2), dont les électrodes (3) sont connectées les unes aux autres, le dispositif de refroidissement présentant au moins un caloduc (10) et un puits de chaleur, le caloduc (10) présentant un évaporateur et un condensateur, le dispositif de refroidissement présentant au moins un premier moyen de connexion (13), lequel est conçu de façon à connecter l'évaporateur du caloduc (10) à au moins une électrode (3) ou un point de connexion de deux électrodes (3) de telle façon que le caloduc (10) soit couplé thermiquement à l'électrode (3) ou au point de connexion, mais que le caloduc (10) et l'électrode (3) soient isolés électriquement, le condensateur du caloduc (1) étant connecté au puits de chaleur, le puits de chaleur étant un couvercle (7) du module de batterie (1) ou un couvercle (23) d'une unité de batterie (20) comprenant plusieurs modules de batterie (1),
l'au moins un caloduc (10) étant conçu en forme de U, une première branche (11) du caloduc (10) en forme de U étant couplée thermiquement à des électrodes (3) du module de batterie (1) et une deuxième branche (12) du caloduc (10) étant couplée thermiquement au couvercle (7, 23),
le caloduc (10) étant conçu de telle façon que, lorsque le couvercle (7, 23) est fermé, le couvercle (7, 23) tend élastiquement la deuxième branche (12).

2. Dispositif de refroidissement selon la revendication 1, **caractérisé en ce que,** entre la première branche (11) et la deuxième branche (12), au moins un élément élastique (14) est disposé, lequel est conçu de telle façon que le couvercle (7, 23) fermé comprime l'élément élastique (14).

3. Dispositif de refroidissement selon l'une quelconque des revendications précédentes, **caractérisé en ce que** le couvercle (7, 23) est en métal, un matériau (15) thermiquement conducteur et électriquement isolant étant disposé entre le caloduc (10) et le couvercle (7, 23).

4. Dispositif de refroidissement selon l'une quelconque des revendications précédentes, **caractérisé en ce que** le couvercle (7, 23) est conçu avec des nervures (8) sur la face supérieure dirigée vers l'extérieur.

5. Dispositif de refroidissement selon l'une quelconque des revendications précédentes, **caractérisé en ce qu'au** moins un caloduc (10) est connecté à un cadre (16), le cadre (16) étant conçu avec au moins un moyen de fixation (18), pour fixer le cadre (16) à un boîtier (5, 22) du module de batterie (1) ou de l'unité de batterie (20).

6. Dispositif de refroidissement selon la revendication 5, **caractérisé en ce que** tous les caloducs (10) affectés à un module de batterie (1) sont connectés à un cadre commun (16).

7. Module de batterie ou unité de batterie, **caractérisé en ce que** le module de batterie (1) ou l'unité de batterie (20) présente au moins un dispositif de refroidissement selon l'une quelconque des revendications 1 à 6.
